(19) Europäisches Patentamt
European Patent Office
Office européen des brevets

(11) **EP 3 128 226 B1**

(12) **FASCICULE DE BREVET EUROPEEN**

(45) Date de publication et mention
de la délivrance du brevet:
**06.03.2019 Bulletin 2019/10**

(51) Int Cl.:
***F21S 41/00*** *(2018.01)*

(21) Numéro de dépôt: **16182530.2**

(22) Date de dépôt: **03.08.2016**

(54) **MODULE LUMINEUX EN MATÉRIAU TRANSPARENT AVEC DEUX FACES DE REFLEXION**

LEUCHTMODUL AUS TRANSPARENTEM MATERIAL MIT ZWEI REFLEXIONSSEITEN

LUMINOUS MODULE MADE OF TRANSPARENT MATERIAL WITH TWO REFLECTING SURFACES

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **06.08.2015 FR 1557584**

(43) Date de publication de la demande:
**08.02.2017 Bulletin 2017/06**

(60) Demande divisionnaire:
**19152472.7**

(73) Titulaire: **VALEO VISION**
**93012 Bobigny Cedex (FR)**

(72) Inventeur: **GROMFELD, Yves**
**49240 Avrillé (FR)**

(56) Documents cités:
**EP-A2- 2 719 940      DE-A1-102011 013 211
US-A1- 2006 087 860**

**Description**

L'invention a trait au domaine de l'éclairage, notamment l'éclairage pour véhicule automobile. L'invention a également trait à un projecteur d'éclairage comprenant un tel module.

Le document de brevet publié FR 3 010 772 A1 divulgue un module d'éclairage avec un corps en matériau transparent comprenant une face d'entrée de la lumière produite par une ou plusieurs sources lumineuses, une face de réflexion avec un bord de coupure et une face de sortie des rayons. La face d'entrée comprend une cavité formée à une extrémité du module, dans le matériau transparent, et délimitée par une surface circulaire formant un dioptre apte à dévier les rayons entrant vers la surface extérieure et périphérique du corps. Les rayons sont alors réfléchis sur la surface extérieure, par application du principe de réflexion totale, pour converger vers le bord de coupure. La face de sortie est généralement convexe et est à l'extrémité opposée du module. La face de réflexion est formée par une entaille formée dans une portion latérale du matériau transparent, entre les faces d'entrée et de sortie. L'arête au creux de l'entaille forme le bord de coupure des rayons et la face de l'entaille située du côté de la face d'entrée forme une face de réflexion en vertu du principe de réflexion totale. Cette face de réflexion est couramment appelée « plieuse » en ce qu'elle « replie » une partie des rayons vers le bas du faisceau. Les rayons provenant de la face d'entrée se propagent dans le matériau transparent essentiellement suivant l'axe longitudinal et optique du module. La majeure partie des rayons passe au niveau du bord de coupure sans subir de réflexion et sortent par la face de sortie. Une partie des rayons rencontre la face de réflexion ou plieuse disposée avant le bord de coupure, pour y subir une réflexion vers une portion haute du corps transparent. Ces rayons rencontrent alors la face de sortie avec un angle d'incidence important. Ils y subissent ainsi une réfraction importante et sont dirigés vers une portion basse du faisceau lumineux. C'est ainsi que le bord de la plieuse permet de réaliser une coupure horizontale du faisceau lumineux. Ce module est intéressant en ce qu'il permet de réaliser avec un nombre d'éléments très réduit un faisceau lumineux à coupure performant. Il présente toutefois l'inconvénient qu'il requiert un certain espace suivant l'axe optique. Le corps transparent s'étend en effet selon son axe longitudinal essentiellement suivant l'axe optique du module. De plus, de par sa forme la face de sortie ne peut servir de face de style, c'est-à-dire directement visible depuis l'extérieur du dispositif d'éclairage comprenant le module. Il est donc nécessaire de prévoir une surface supplémentaire de style ce qui augmente également l'encombrement.

Le document US2006/0087860A1 divulgue un module d'éclairage avec un corps en matériau transparent avec des faces de réflexion agencées de manière à former un faisceau avec une ligne de coupure.

L'invention a pour objectif de pallier au moins un problème de l'état de la technique, en l'occurrence de l'état de la technique susmentionné. Plus précisément, l'invention a pour objectif de proposer un module lumineux compact, en particulier suivant son axe optique.

L'invention a pour objet un module lumineux, notamment pour véhicule automobile, comprenant un corps en matériau translucide ou transparent avec : une face d'entrée de rayons lumineux produits par une ou plusieurs sources lumineuses ; une première face de réflexion avec un bord de coupure des rayons provenant de la face d'entrée ; une face de sortie des rayons lumineux en un faisceau de sortie suivant un axe optique du module ; remarquable en ce qu'il comprend, en outre, une deuxième face de réflexion, vers la face de sortie, des rayons provenant de la première face de réflexion.

Selon un mode avantageux de l'invention, la première face de réflexion forme un dioptre apte à réfléchir, par le principe de réflexion totale, une partie des rayons provenant de la face d'entrée.

Selon un mode avantageux de l'invention, la première face de réflexion forme un angle compris entre 5° et 40° avec la direction moyenne des faisceaux lumineux se propageant depuis la face d'entrée jusqu'à ladite face de réflexion.

Selon un mode avantageux de l'invention, la première face de réflexion comprend deux portions adjacentes formant une arête dirigée vers la deuxième face de réflexion et/ou la face de sortie, lesdites portions formant, transversalement à ladite arête, un profil convexe.

Selon l'invention, le bord de coupure est formé par l'intersection de la première face de réflexion avec une face intermédiaire située entre la première face de réflexion et la deuxième face de réflexion, ladite première face de réflexion et ladite face intermédiaire formant un profil concave.

Selon un mode avantageux de l'invention, la face intermédiaire comprend deux portions adjacentes formant une arête dirigée vers la deuxième face de réflexion, lesdites portions formant, transversalement à ladite arête, un profil convexe.

Selon l'invention, la deuxième face de réflexion s'étend entre la face intermédiaire et la face de sortie.

Selon un mode avantageux de l'invention, la deuxième face de réflexion est généralement courbe et convexe.

Selon un mode avantageux de l'invention, la deuxième face de réflexion forme un dioptre apte à réfléchir, par le principe de réflexion totale, les rayons provenant de la première face de réflexion.

Selon un mode avantageux de l'invention, le corps comprend une première portion s'étendant depuis la face d'entrée jusqu'à la deuxième face de réflexion suivant une direction principale formant un angle compris entre 60° et 120° avec l'axe optique. Selon un mode avantageux de l'invention, le module comprend une deuxième portion s'étendant depuis la deuxième face de réflexion jusqu'à la face de sortie, suivant l'axe optique.

Selon un mode avantageux de l'invention, la face d'entrée comprend un ou plusieurs collimateurs aptes à dévier les rayons lumineux d'une ou plusieurs sources lumineuses, respectivement, de manière à former un ou plusieurs faisceaux de rayons dirigés vers la deuxième face de réflexion et passant devant le bord de coupure.

Selon un mode avantageux de l'invention, le collimateur, ou chacun des collimateurs, est formé par une protubérance du corps avec une surface extérieure circulaire préférentiellement de profil elliptique, ladite protubérance comprenant une cavité apte à recevoir la source lumineuse correspondante.

Selon un mode avantageux de l'invention, la face d'entrée comprend un ou plusieurs collimateurs aptes à dévier les rayons lumineux d'une ou plusieurs sources lumineuses, respectivement, vers un point ou segment de convergence situé sur le bord de coupure.

Selon un mode avantageux de l'invention, le collimateur ou chacun des collimateurs est formé par une protubérance du corps, ayant une surface extérieure circulaire de profil elliptique et une cavité apte à recevoir la source lumineuse correspondante.

Selon un mode avantageux de l'invention, les collimateurs sont au nombre d'au moins trois et forment, sur la face d'entrée, au moins une rangée s'étendant perpendiculairement à l'axe optique.

Selon un mode avantageux de l'invention, le module comprend les sources lumineuses, lesdites sources étant du type source lumineuse à semi-conducteur, par exemple du type diode à électroluminescence, disposées sur une platine commune.

Selon un mode avantageux de l'invention, le faisceau de sortie est un faisceau d'éclairage à coupure horizontale ou verticale.

L'invention a également pour objet un projecteur d'éclairage pour véhicule automobile comprenant un boîtier et au moins un module lumineux, remarquable en ce que le module lumineux est conforme à l'invention.

Selon un mode avantageux de l'invention, le projecteur comprend deux des modules lumineux, disposés côte-à-côte et dont les faisceaux de sortie se superposent, l'un desdits modules formant un faisceau étendu à coupure généralement droite et l'autre formant un faisceau étroit à coupure horizontale avec un ressaut.

Selon un mode avantageux de l'invention, la face de sortie du module lumineux est une surface de style, c'est-à-dire une surface visible depuis l'extérieur du projecteur.

Les mesures de l'invention sont intéressantes en ce qu'elles permettent de réaliser un module lumineux particulièrement compact selon la direction de l'axe optique, c'est-à-dire l'axe longitudinal du véhicule. L'utilisation d'une plieuse dioptrique, à savoir que la première face de réflexion réfléchit les rayons par le principe de réflexion totale, est avantageuse notamment en ce qu'elle rend le module plus tolérant aux défauts de focalisation. De plus, l'utilisation de plusieurs collimateurs sur la face d'entrée permet de composer le faisceau lumineux et confère ainsi une grande flexibilité pour la réalisation de différentes fonctions. De plus, le module prévoit une face de sortie commune, ce qui présente des avantages en termes d'esthétique et de précision du faisceau total résultant de l'addition des faisceaux produits par les différents collimateurs.

D'autres caractéristiques et avantages de la présente invention seront mieux compris à l'aide de la description et des dessins parmi lesquels :

- La figure 1 est une vue en perspective d'un module lumineux conforme à l'invention ;
- La figure 2 est un vue en perspective arrière du module de la figure 1 ;
- La figure 3 est un vue en coupe suivant un plan longitudinal médian du module des figures 1 et 2 ;
- La figure 4 est une vue en perspective de détail de la portion inférieure du module des figures 1 à 3 ;
- La figure 5 est une représentation schématique du parcours d'une partie des rayons du module des figures 1 à 4 ;
- La figure 6 est une représentation schématique du parcours des rayons du module des figures 1 à 4.

Dans la description qui va suivre, les termes relatifs tels que « haut(e)(s) », « supérieur(e)(s) », « bas(se)(s) », « inférieur(e)(s) », « avant » et « arrière » sont à comprendre en relation avec l'orientation du module selon les figures, étant entendu que le module peut en pratique prendre d'autres orientations.

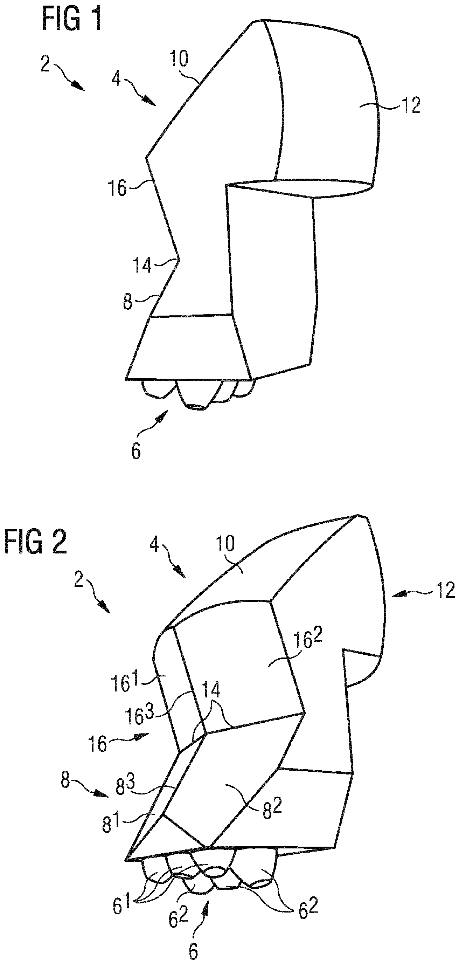

Les figures 1 à 4 illustrent un module lumineux conforme à l'invention. Le module 2 comprend essentiellement un corps 4 et des sources lumineuses (non représentées).

Le corps 4 est fait majoritairement, préférentiellement totalement, d'un matériau transparent ou translucide. Ce matériau peut être du verre ou préférentiellement du plastique, comme notamment du polycarbonate (PC).

Le corps 4 comprend une face d'entrée 6 pour la lumière produite par les sources lumineuses. Ces dernières peuvent être des diodes à électroluminescence ou encore du type laser. Le corps 4 comprend également une première face de réflexion 8, destinée à réfléchir une partie seulement des rayons, une deuxième face de réflexion 10, destinée elle à réfléchir la quasi-totalité des rayons, et une face de sortie.

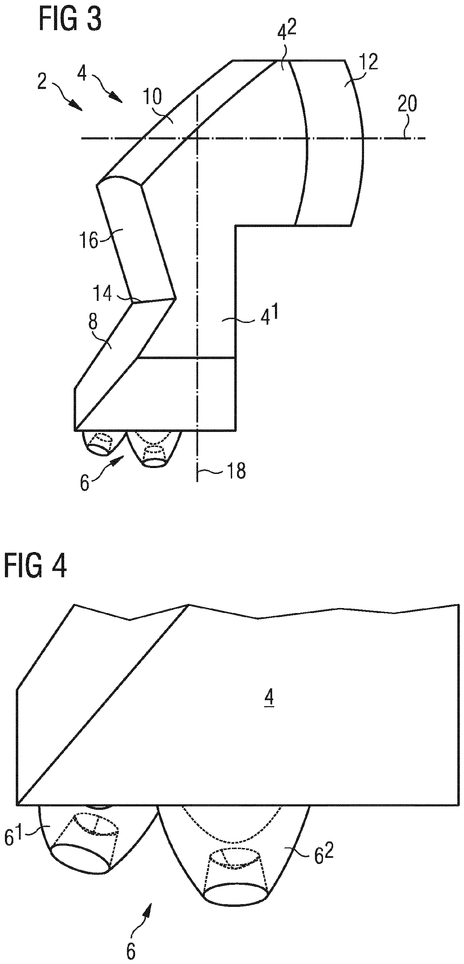

La face d'entrée 6 peut comprendre des collimateurs $6^1$ et $6^2$. Ils sont davantage visibles à la figure 4. En l'occurrence ils peuvent former des protubérances faisant saillie du corps et formant une surface extérieure qui peut être généralement circulaire. Chacune de ces protubérances comprend une cavité destinée à recevoir une des sources lumineuses. La surface intérieure des protubérances délimitant la cavité forme un premier dioptre avec l'air ambiant, provoquant une réfraction des rayons la traversant. La surface extérieure des protubérances forme un deuxième dioptre avec l'air ambiant. En fonction de l'angle d'incidence des rayons la rencontrant, ceux-ci peuvent être réfléchis par le principe de réflexion totale. En effet, en optique géométrique, le phénomène de réflexion totale survient lorsqu'un rayon lumineux arrive sur la surface de séparation de deux milieux d'indices optiques différents avec un angle d'incidence supérieur à une valeur critique : il n'y a alors plus de rayon réfracté transmis et seul subsiste un rayon réfléchi. Ce angle d'incidence limite $\vartheta$ est obtenu par application de la loi de Snell-Decartes, à savoir que $\theta = \sin^{-1} \frac{n_2}{n_1}$, où $n_2$ est l'indice de réfraction de l'air et $n_1$ est l'indice de réfraction du matériau transparent ou translucide formant la protubérance. Pour un matériau comme du polycarbonate d'indice de réfraction de l'ordre 1.591, l'angle limite de réfraction $\vartheta$ est de l'ordre de 39°. La surface extérieure des protubérances formant les deuxièmes dioptres peut présenter un profil parabolique ou elliptique.

Le corps 4 du module 2 comprend une face intermédiaire 16 entre la première face de réflexion 8 et la deuxième face de réflexion 10. Comme cela est particulièrement visible aux figures 2 et 3, la face intermédiaire 16 et la première face de réflexion 8 présentent un profil concave et forment à leur intersection un bord de coupure 14 des rayons se propageant dans le corps 4. En effet, la majeure partie des rayons se propagent depuis la face d'entrée 6 vers la deuxième face de réflexion 10 en passant devant le bord de coupure 14, c'est-à-dire sans subir de réflexion intermédiaire. Or une partie des rayons provenant de la face d'entrée 6 rencontre la première face de réflexion 8, plus précisément la portion de ladite face qui est à adjacente au bord de coupure 14. Ces rayons sont alors réfléchis, avantageusement par le principe de réflexion totale (décrit précédemment en relation avec les protubérances $6^1$ et $6^2$ de la face d'entrée 6). Dans ce cas, la face de réflexion 8 n'a pas besoin de recevoir un traitement réfléchissant. La réflexion d'une partie des rayons par la première face de réflexion a pour effet de renvoyer ces rayons vers une portion supérieure de la deuxième face de réflexion 10 et/ou de la face de sortie 12, avec des angles d'incidence importants ayant pour effet de réfracter ces rayons vers une portion basse du faisceau lumineux. La première face de réflexion, en association avec le bord de coupure, est couramment appelée « plieuse », en ce qu'elle « replie » une partie des rayons vers une portion basse du faisceau lumineux, assurant ainsi une fonction de coupure horizontale du faisceau.

La première face de réflexion 8 forme avantageusement un angle compris entre 5° et 40° avec la direction moyenne des faisceaux lumineux se propageant depuis la face d'entrée jusqu'à ladite face de réflexion.

A la figure 2, on peut observer que la première face de réflexion 8 peut comprendre deux portions $8^1$ et $8^2$ adjacentes, ces deux portions formant une arête $8^3$.

Il en va de même pour la face intermédiaire 16 qui peut également comprendre deux portions $16^1$ et $16^2$ formant une arête $16^3$. Les deux arêtes $8^3$ et $16^3$ sont avantageusement alignées et adjacentes bout-à-bout. Il en résulte que le bord de coupure 14, dans cette configuration, n'est pas rectiligne mais bien constitué de deux segments adjacents bout-à-bout.

La deuxième face de réflexion 10 peut être généralement galbée, en l'occurrence convexe vu de l'extérieur au corps 4. Il en va de même pour la face de sortie 12. La deuxième face de réflexion 10 réfléchit avantageusement les rayons par le principe de réflexion totale (décrit précédemment en relation avec les protubérances $6^1$ et $6^2$ de la face d'entrée 6). Dans ce cas, la face de réflexion 10 n'a pas besoin de recevoir un traitement réfléchissant.

En référence à la figure 3, le corps 4 peut comprendre une première portion $4^1$ s'étendant généralement suivant un axe longitudinal généralement transversal, avantageusement perpendiculaire, à la face d'entrée 6. L'angle formé par ces deux axes est avantageusement compris entre 60° et 120°. Les rayons se propagent ainsi généralement suivant l'axe longitudinal 18, depuis la face d'entrée 6 jusqu'à la deuxième face de réflexion 10, en passant, pour certains, par une réflexion sur la première face de réflexion 8. Le corps peut également comprendre une deuxième portion $4^2$ s'étendant transversalement à la première et généralement suivant l'axe optique 20. Ce dernier représente la direction moyenne des rayons lumineux sortant de la face de sortie 12.

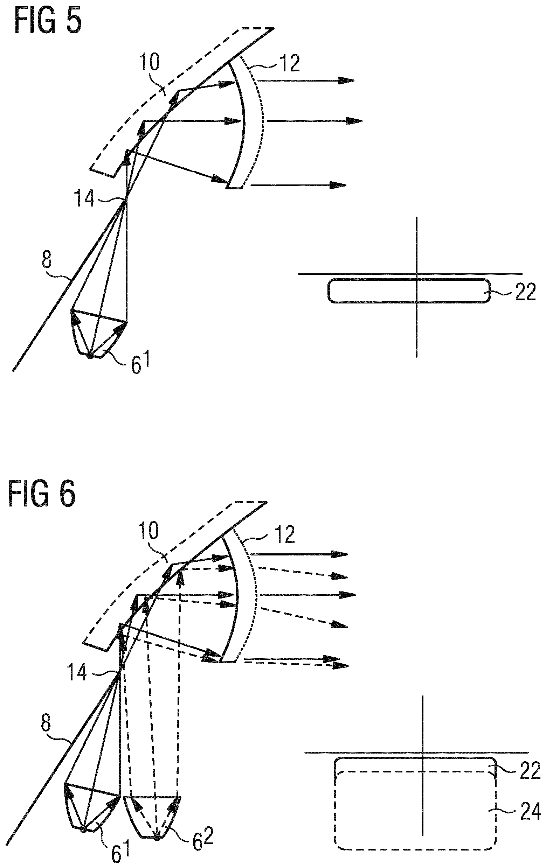

Les figures 5 et 6 illustrent le principe de propagation des rayons au sein du corps 4 du module 2 des figures 1 à 4.

A la figure 5, on peut observer que les rayons lumineux produits par le collimateur $6^1$ convergent en un point ou un segment focal passant par le bord de coupure 14. Cela signifie que la majorité, voire la grande majorité, des rayons provenant du collimateur à foyer $6^1$ en question passent devant ou sur le bord de coupure 14 sans subir de réflexion. Ces rayons rencontrent alors la deuxième face de réflexion 10 pour y être réfléchis en direction de la face de sortie 12. Les courbures de la deuxième surface de réflexion 10 et/ou de la surface de sortie sont calculées pour former un faisceau lumineux suivant l'axe optique du module. En l'occurrence, les rayons provenant du ou des collimateurs $6^1$ forment la portion 22 du faisceau, à savoir la portion supérieure avec le bord de coupure.

La figure 6 illustre le parcours des rayons lumineux produits par le collimateur $6^1$, comme illustré à la figure 5, avec, en plus, les rayons lumineux produits par le collimateur $6^2$. Il est fait référence à la description de la figure 5 pour les rayons du collimateur $6^1$. On peut observer que les rayons produits par le collimateur $6^2$ sont généralement parallèles les uns aux autres et passent majoritairement devant le bord de coupure 14. Comme cela est visible à la figure 6, ces rayons rencontrent la deuxième surface de réflexion 10 avec des angles d'incidence plus faibles que les rayons provenant de l'autre collimateur $6^1$. Ces rayons sont alors réfléchis suivant des directions telles, qu'après réfraction au travers de la face de sortie 12, ils forment la portion inférieure 24 du faisceau lumineux.

La conjugaison des deux types de collimateurs $6^1$ et $6^2$ permet ainsi de former un faisceau avec une coupure maîtrisée et une portion basse homogène et puissante.

Comme cela est visible aux figures 1 à 4, la face d'entrée 6 peut comprendre plusieurs collimateurs à foyers $6^1$ et plusieurs collimateurs $6^2$. Ces deux types de collimateurs sont disposés en rangées s'étendant transversalement à l'axe optique. Chacun des collimateurs d'une rangée permet ainsi de participer à la formation du faisceau dans une direction latérale. Le ou les collimateurs à foyer $6^1$ est/sont avantageusement disposé en arrière par rapport aux autres collimateurs.

Aux figures 5 et 6, on peut observer que la coupure réalisée apparait être généralement rectiligne. Or la réglementation impose un ressaut, couramment désigné par l'expression anglo-saxonne « kink ». Le ressaut de la coupure peut être réalisé par le module moyennant un profil approprié du bord de coupure. Alternativement, le ressaut peut être assuré par un autre module disposé à côté du module des figures 1 à 6, dont le faisceau vient s'ajouter au faisceau produit par le module principal.

Les sources lumineuses du ou des modules peuvent être disposées sur un support commun, comme par exemple une platine avec circuit imprimé.

Un ou plusieurs modules tels que décrits ci-avant peuvent être intégrés dans un boîtier en vue de réaliser un projecteur.

## Revendications

1. Module lumineux (2), notamment pour véhicule automobile, comprenant un corps (4) en matériau translucide ou transparent avec :

   - une face d'entrée (6) de rayons lumineux produits par une ou plusieurs sources lumineuses ;
   - une première face de réflexion (8) avec un bord de coupure (14) des rayons provenant de la face d'entrée (6) ;
   - une face de sortie (12) des rayons lumineux en un faisceau de sortie suivant un axe optique (20) du module ;
   - une deuxième face de réflexion (10), vers la face de sortie, des rayons provenant de la première face de réflexion (8), **caractérisé en ce que** le bord de coupure (14) est formé par l'intersection de la première face de réflexion (8) avec une face intermédiaire (16) située entre la première face de réflexion (8) et la deuxième face de réflexion (10), ladite première face de réflexion (8) et ladite face intermédiaire (16) formant un profil concave, la deuxième face de réflexion (10) s'étendant entre la face intermédiaire (16) et la face de sortie (12).

2. Module lumineux (2) suivant la revendication 1, **caractérisé en ce que** la première face de réflexion (8) forme un dioptre apte à réfléchir, par le principe de réflexion totale, une partie des rayons provenant de la face d'entrée (6).

3. Module lumineux (2) suivant l'une des revendications 1 et 2, **caractérisé en ce que** la première face de réflexion (8) forme un angle compris entre 5° et 40° avec la direction moyenne des faisceaux lumineux se propageant depuis la face d'entrée (6) jusqu'à ladite face de réflexion (8).

4. Module lumineux (2) suivant l'une des revendications 1 à 3, **caractérisé en ce que** la première face de réflexion (8) comprend deux portions adjacentes ($8^1$, $8^2$) formant une arête ($8^3$) dirigée vers la deuxième face de réflexion (10) et/ou la face de sortie (12), lesdites portions ($8^1$, $8^2$) formant, transversalement à ladite arête ($8^3$), un profil convexe.

5. Module lumineux (2) suivant l'une des revendications 1 à 4, **caractérisé en ce que** la face intermédiaire (16) comprend deux portions adjacentes ($16^1$, $16^2$) formant une arête ($16^3$) dirigée vers la deuxième face de réflexion (10), lesdites portions ($16^1$, $16^2$) formant, transversalement à ladite arête ($16^3$), un profil convexe.

6. Module lumineux (2) suivant l'une des revendications 1 à 5, **caractérisé en ce que** la deuxième face de réflexion (10) est généralement courbe et convexe.

7. Module lumineux (2) suivant l'une des revendications 1 à 6, **caractérisé en ce que** la deuxième face de réflexion (10) forme un dioptre apte à réfléchir, par le principe de réflexion totale, les rayons provenant de la première face de réflexion (8).

8. Module lumineux (2) suivant l'une des revendications 1 à 7, **caractérisé en ce que** le corps (4) comprend une première portion ($4^1$) s'étendant depuis la face d'entrée (6) jusqu'à la deuxième face de réflexion (10) suivant une direction principale (18) formant un angle compris entre 60° et 120° avec l'axe optique (20).

9. Module lumineux (2) suivant la revendication 8, **caractérisé en ce que** le corps (4) comprend une deuxième portion ($4^2$) s'étendant depuis la deuxième face de réflexion (10) jusqu'à la face de sortie (12), suivant l'axe optique (20).

**10.** Module lumineux (2) suivant l'une des revendications 1 à 9, **caractérisé en ce que** la face d'entrée (6) comprend un ou plusieurs collimateurs ($6^2$) aptes à dévier les rayons lumineux d'une ou plusieurs sources lumineuses, respectivement, de manière à former un ou plusieurs faisceaux de rayons dirigés vers la deuxième face de réflexion (10) et passant devant le bord de coupure (14).

**11.** Module lumineux (2) suivant la revendication 10, **caractérisé en ce que** le collimateur, ou chacun des collimateurs ($6^2$), est formé par une protubérance du corps avec une surface extérieure circulaire préférentiellement de profil elliptique, ladite protubérance comprenant une cavité apte à recevoir la source lumineuse correspondante.

**12.** Module lumineux (2) suivant l'une des revendications 1 à 11, **caractérisé en ce que** la face d'entrée (6) comprend un ou plusieurs collimateurs ($6^1$) aptes à dévier les rayons lumineux d'une ou plusieurs sources lumineuses, respectivement, vers un point ou segment de convergence situé sur le bord de coupure (14).

**13.** Module lumineux (2) suivant la revendication 12, **caractérisé en ce que** le collimateur ou chacun des collimateurs ($6^1$), est formé par une protubérance du corps, ayant une surface extérieure circulaire de profil elliptique et une cavité apte à recevoir la source lumineuse correspondante.


**Patentansprüche**

**1.** Leuchtmodul (2), insbesondere für ein Kraftfahrzeug, welches einen Körper (4) aus durchscheinendem oder transparentem Material umfasst, mit:

- einer Eintrittsseite (6) für Lichtstrahlen, die von einer oder mehreren Lichtquellen erzeugt werden;
- einer ersten Reflexionsseite (8) mit einem Begrenzungsrand (14) für die von der Eintrittsseite (6) kommenden Strahlen;
- einer Austrittsseite (12) zum Austritt der Lichtstrahlen in einem Austrittsbündel entlang einer optischen Achse (20) des Moduls;
- einer zweiten Reflexionsseite (10) zur Reflexion der von der ersten Reflexionsseite (8) kommenden Strahlen zur Austrittsseite hin,

**dadurch gekennzeichnet, dass** der Begrenzungsrand (14) durch den Schnitt der ersten Reflexionsseite (8) mit einer Zwischenseite (16), die sich zwischen der ersten Reflexionsseite (8) und der zweiten Reflexionsseite (10) befindet, gebildet wird, wobei die erste Reflexionsseite (8) und die Zwischenseite (16) ein konkaves Profil bilden, wobei sich die zweite Reflexionsseite (10) zwischen der Zwischenseite (16) und der Austrittsseite (12) erstreckt.

**2.** Leuchtmodul (2) nach Anspruch 1, **dadurch gekennzeichnet, dass** die erste Reflexionsseite (8) einen Diopter bildet, der dafür ausgelegt ist, nach dem Prinzip der Totalreflexion einen Teil der von der Eintrittsseite (6) kommenden Strahlen zu reflektieren.

**3.** Leuchtmodul (2) nach einem der Ansprüche 1 und 2, **dadurch gekennzeichnet, dass** die erste Reflexionsseite (8) einen Winkel zwischen 5° und 40° mit der mittleren Richtung der Lichtbündel bildet, die von der Eintrittsseite (6) zur Reflexionsseite (8) verlaufen.

**4.** Leuchtmodul (2) nach einem der Ansprüche 1 bis 3, **dadurch gekennzeichnet, dass** die erste Reflexionsseite (8) zwei benachbarte Abschnitte ($8^1$, $8^2$) umfasst, die eine Kante ($8^3$) bilden, die der zweiten Reflexionsseite (10) und/oder der Austrittsseite (12) zugewandt ist, wobei die Abschnitte ($8^1$, $8^2$) quer zu der Kante ($8^3$) ein konvexes Profil bilden.

**5.** Leuchtmodul (2) nach einem der Ansprüche 1 bis 4, **dadurch gekennzeichnet, dass** die Zwischenseite (16) zwei benachbarte Abschnitte ($16^1$, $16^2$) umfasst, die eine Kante ($16^3$) bilden, die der zweiten Reflexionsseite (10) zugewandt ist, wobei die Abschnitte ($16^1$, $16^2$) quer zu der Kante ($16^3$) ein konvexes Profil bilden.

**6.** Leuchtmodul (2) nach einem der Ansprüche 1 bis 5, **dadurch gekennzeichnet, dass** die zweite Reflexionsseite (10) im Wesentlichen gekrümmt und konvex ist.

**7.** Leuchtmodul (2) nach einem der Ansprüche 1 bis 6, **dadurch gekennzeichnet, dass** die zweite Reflexionsseite (10) einen Diopter bildet, der dafür ausgelegt ist, nach dem Prinzip der Totalreflexion die von der ersten Reflexionsseite (8) kommenden Strahlen zu reflektieren.

**8.** Leuchtmodul (2) nach einem der Ansprüche 1 bis 7, **dadurch gekennzeichnet, dass** der Körper (4) einen ersten Abschnitt ($4^1$) umfasst, der sich von der Eintrittsseite (6) bis zur zweiten Reflexionsseite (10) entlang einer Hauptrichtung (18) erstreckt, die mit der optischen Achse (20) einen Winkel zwischen 60° und 120° bildet.

**9.** Leuchtmodul (2) nach Anspruch 8, **dadurch gekennzeichnet, dass** der Körper (4) einen zweiten Abschnitt ($4^2$) umfasst, der sich von der zweiten Reflexionsseite (10) bis zur Austrittsseite (12) entlang der optischen Achse (20) erstreckt.

**10.** Leuchtmodul (2) nach einem der Ansprüche 1 bis 9, **dadurch gekennzeichnet, dass** die Eintrittsseite (6) einen oder mehrere Kollimatoren ($6^2$) umfasst, die dafür ausgelegt sind, die Lichtstrahlen einer bzw. mehrerer Lichtquellen derart abzulenken, dass ein oder mehrere Strahlenbündel gebildet werden, die zur zweiten Reflexionsseite (10) hin gerichtet sind und vor dem Begrenzungsrand (14) verlaufen.

**11.** Leuchtmodul (2) nach Anspruch 10, **dadurch gekennzeichnet, dass** der Kollimator oder jeder der Kollimatoren ($6^2$) von einem Vorsprung des Körpers mit einer kreisförmigen Außenfläche mit vorzugsweise elliptischem Profil gebildet wird, wobei dieser Vorsprung einen Hohlraum umfasst, der dafür ausgelegt ist, die entsprechende Lichtquelle aufzunehmen.

**12.** Leuchtmodul (2) nach einem der Ansprüche 1 bis 11, **dadurch gekennzeichnet, dass** die Eintrittsseite (6) einen oder mehrere Kollimatoren ($6^1$) umfasst, die dafür ausgelegt sind, die Lichtstrahlen einer bzw. mehrerer Lichtquellen zu einem Konvergenzpunkt oder -segment hin abzulenken, der bzw. das sich auf dem Begrenzungsrand (14) befindet.

**13.** Leuchtmodul (2) nach Anspruch 12, **dadurch gekennzeichnet, dass** der Kollimator oder jeder der Kollimatoren ($6^1$) von einem Vorsprung des Körpers gebildet wird, der eine kreisförmige Außenfläche mit elliptischem Profil und einen Hohlraum, der dafür ausgelegt ist, die entsprechende Lichtquelle aufzunehmen, aufweist.

**Claims**

**1.** Light-emitting module (2), notably for a motor vehicle, including a translucent or transparent material body (4) having:

- an entry face (6) for light rays produced by one or more light sources;
- a first reflection face (8) with an edge (14) for cutting off the rays coming from the entry face (6);
- an exit face (12) for light rays in an exit beam along an optical axis (20) of the module;
- a second reflection face (10) for reflecting toward the exit face rays coming from the first reflection face (8),

**characterized in that** the cut-off edge (14) is formed by the intersection of the first reflection face (8) with an intermediate face (16) situated between the first reflection face (8) and the second reflection face (10), said first reflection face (8) and said intermediate face (16) forming a concave profile, the second reflection face (10) extending between the intermediate face (16) and the exit face (12).

**2.** Light-emitting module (2) according to Claim 1, **characterized in that** the first reflecting face (8) forms a diopter adapted to reflect by the principle of total internal reflection some of the rays coming from the entry face (6).

**3.** Light-emitting module (2), according to either one of Claims 1 and 2, **characterized in that** the first reflection face (8) forms an angle between 5° and 40° inclusive with the mean direction of the light beams propagating from the entry face (6) to said reflection face (8).

**4.** Light-emitting module (2), according to any one of Claims 1 to 3, **characterized in that** the first reflection face (8) comprises two adjacent portions ($8^1$, $8^2$) forming an edge ($8^3$) directed toward the second reflection face (10) and/or the exit face (12), said portions ($8^1$, $8^2$) forming, transversely to said edge ($8^3$), a convex profile.

**5.** Light-emitting module (2), according to any one of Claims 1 to 4, **characterized in that** the intermediate face (16) comprises two adjacent portions ($16^1$, $16^2$) forming an edge ($16^3$) directed toward the second reflection face (10), said portions ($16^1$, $16^2$) forming, transversely to said edge ($16^3$), a convex profile.

**6.** Light-emitting module (2), according to any one of Claims 1 to 5, **characterized in that** the second reflection face (10) is generally curved and convex.

**7.** Light-emitting module (2), according to any one of Claims 1 to 6, **characterized in that** the second reflection face (10) forms a diopter adapted to reflect, by the principle of total internal reflection, the rays coming from the first reflection face (8).

**8.** Light-emitting module (2), according to any one of Claims 1 to 7, **characterized in that** the body (4) includes a first portion ($4^1$) extending from the entry face (6) as far as the second reflection face (10) in a principle direction (18) forming an angle between 60° and 120° inclusive with the optical axis (20).

**9.** Light-emitting module (2), according to Claim 8, **characterized in that** the body (4) includes a second portion ($4^2$) extending from the second reflection face (10) as far as the exit face (12) along the optical axis (20).

**10.** Light-emitting module (2), according to any one of Claims 1 to 9, **characterized in that** the entry face (6) includes one or more collimators ($6^2$) adapted to deflect the light rays from one or more respective light sources so as to form one or more beams of rays directed toward the second reflection face (10) and passing in front of the cut-off edge (14).

11. Light-emitting module (2), according to Claim 10, **characterized in that** the collimator, or each of the collimators ($6^2$), is formed by a protuberance of the body with a circular exterior surface preferably having an elliptical profile, said protuberance including a cavity adapted to receive the corresponding light source.

12. Light-emitting module (2), according to any one of Claims 1 to 11, **characterized in that** the entry face (6) includes one or more collimators ($6^1$) adapted to deflect the light rays from one or more light sources, respectively, toward a convergence point or segment situated on the cut-off edge (14).

13. Light-emitting module (2), according to Claim 12, **characterized in that** the collimator or each of the collimators ($6^1$), is formed by a protuberance of the body having a circular exterior surface having an elliptical profile and a cavity adapted to receive the corresponding light source.

FIG 1

FIG 2

## FIG 3

## FIG 4

FIG 5

FIG 6

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3010772 A1
- US 20060087860 A1